# EUROPEAN PATENT APPLICATION

(11) **EP 1 464 900 A2**
(43) Date of publication of application: **06.10.2004**
(21) Application number: 04007808.1
(22) Date of filing: 31.03.2004
(51) Int. Cl.: F25B 9/00, F25B 9/06, F01B 3/10, F16H 3/72, F04C 29/00, F04C 29/10, F04B 35/00, F04B 27/12

(54) **Refrigeration cycle apparatus and unit for refrigeration cycle apparatus**

(30) Priority: 31.03.2003 JP 2003097047
(71) Applicant: Kabushiki Kaisha Toyota Jidoshokki, Kariya-shi, Aichi-ken (JP)
(72) Inventor: Murase, Masakazu, Kariya-shi Aichi-ken (JP); Kawaguchi, Masahiro, Kariya-shi Aichi-ken (JP); Iguchi, Masao, Kariya-shi Aichi-ken (JP); Iwasa, Jiro, Kariya-shi Aichi-ken (JP)
(74) Representative: Leson, Thomas Johannes Alois, Dipl.-Ing.

(57) **Abstract**

A refrigeration cycle apparatus has a compressor (11), a radiator (12), an expansion device (13), an evaporator (14), and a variable-speed mechanism (51). When a rotary shaft (37) of the compressor (11) is rotated, the compressor (11) increases the pressure of refrigerant. The radiator (12) cools refrigerant the pressure of which has been increased by the compressor (11). The expansion device (13) generates power using the decompression and expansion and transmits the power to the rotary shaft (37). The evaporator (14) heats refrigerant that has been decompressed and expanded by the expansion device (13). The variable-speed mechanism (51) is capable of changing the discharge rate of the expansion device (13) per rotation of the rotary shaft (37). This permits the expansion device (13) to increase the amount of recovered power.

## Description

### BACKGROUND OF THE INVENTION

The present invention relates to a refrigeration cycle apparatus having a refrigerant circulation passage including a compressor that increases the pressure of refrigerant, a radiator that cools refrigerant the pressure of which has been increased by the compressor, an expansion device that decompresses and expands the refrigerant cooled by the radiator to extract power to drive the compressor, and an evaporator for heating the refrigerant that has been decompressed and expanded by the expansion device. The present invention also pertains to a unit for the refrigeration cycle apparatus.

Japanese Laid-Open Patent Publication No. 2002-22298 discloses such a refrigeration cycle apparatus. The refrigeration cycle apparatus includes a refrigerant circulation passage that includes a compressor, a radiator, an expansion device, and an evaporator. The expansion device and a decompression valve are located between the outlet of the radiator and the inlet of the evaporator. The expansion device is located upstream of the decompression valve. The expansion device decompresses and expands refrigerant that has been cooled by the radiator, thereby generating power. The expansion device then transmits the power to the compressor. That is, the expansion device recovers power.

To transmit power extracted by the expansion device to the compressor, a structure may be employed in which a rotary shaft for transmitting power generated by the expansion device is connected to a rotary shaft for driving the compressor, so that the shafts rotate integrally. However, in this structure, the flow rate of refrigerant discharged by the expansion device can fluctuate under the influence of rotation speed of the rotary shaft of the compressor. The fluctuation influences the cycle pressure of the refrigerant circulation passage. The decompression valve, for example, may be constructed to adjust the cycle pressure to cancel the influence.

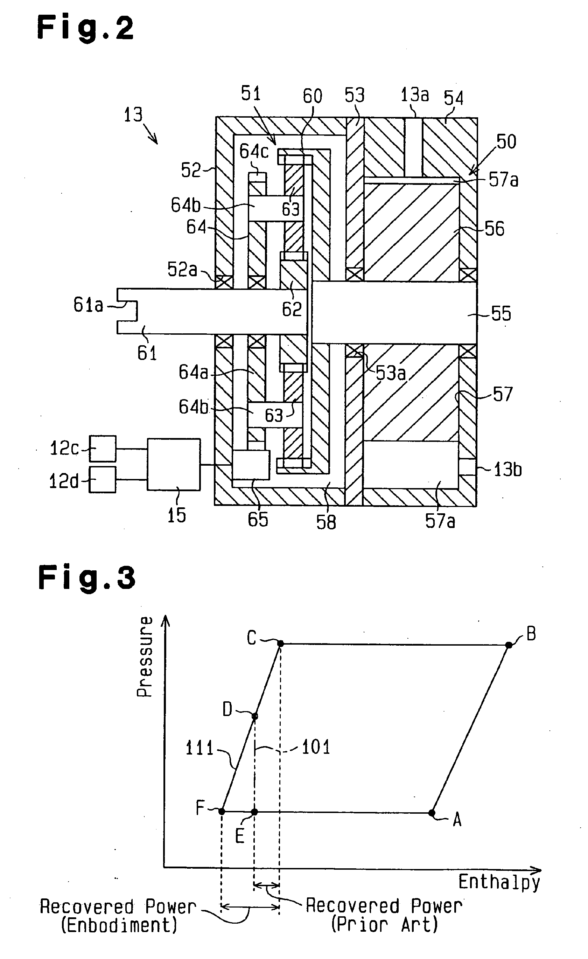

Line 101 in Fig. 3 represents the relationship between the enthalpy and the pressure of the refrigerant in the above described refrigeration cycle apparatus. In the line 101, a condition A represents the enthalpy and the pressure of the refrigerant at the suction inlet of the compressor (that is, at the outlet of the evaporator). A condition B represents the enthalpy and the pressure of the refrigerant at the discharge outlet of the compressor (that is, at the inlet of the radiator). A condition C represents the enthalpy and the pressure of the refrigerant at the inlet of the expansion device (that is, at the outlet of the radiator). A condition D represents the enthalpy and the pressure of the refrigerant at the outlet of the expansion device (that is, at the inlet of the decompression valve). A condition E represents the enthalpy and the pressure of the refrigerant at the outlet of the decompression valve (that is, at the inlet of the evaporator).

In the aforementioned refrigeration cycle apparatus, the refrigerant shifts from the condition C to the condition D due to decompression and expansion by the expansion device. The difference of enthalpy between the condition C and the condition D represents the magnitude of power generated by the expansion device. The refrigerant is shifted from the condition D to the condition E of a lower pressure by the decompression valve.

However, although the above configuration is capable of recovering power with the expansion device while regulating the cycle pressure, the decompression valve decreases the pressure of refrigerant by an amount corresponding to the pressure difference between the condition D and the condition E in order to adjust the cycle pressure. Therefore, the amount of power that corresponds to the decompression cannot be recovered

### SUMMARY OF THE INVENTION

Accordingly, it is an objective of the present invention to provide a refrigeration cycle apparatus and a unit for the refrigeration cycle apparatus that permit an expansion device to increase the amount of recovered power.

To achieve the foregoing objective, the present invention provides a refrigeration cycle apparatus. The refrigeration cycle apparatus has a compressor, a radiator, an expansion device, an evaporator, and a variable discharge rate mechanism. The compressor has a rotary shaft. The rotary shaft is rotated by an external drive source. When the rotary shaft is rotated, the compressor increases the pressure of refrigerant. The radiator cools refrigerant the pressure of which has been increased by the compressor. The expansion device decompresses and expands refrigerant that has been cooled by the radiator, and then discharges the refrigerant. The expansion device generates power using the decompression and expansion and transmits the power to the rotary shaft. The evaporator heats refrigerant that has been decompressed and expanded by the expansion device. The variable discharge rate mechanism is capable of changing the discharge rate of the expansion device per rotation of the rotary shaft.

The present invention also provides a unit incorporated in a refrigeration cycle apparatus. The refrigeration cycle apparatus includes a radiator for cooling introduced refrigerant, and an evaporator for heating introduced refrigerant. The unit has a compressor, an expansion device and a variable discharge rate mechanism. The compressor has a rotary shaft. The rotary shaft is rotated by an external drive source. When the rotary shaft is rotated, the compressor increases the pressure of refrigerant and sends the refrigerant to the radiator. The expansion device decompresses and expands refrigerant sent from the radiator, and discharges the refrigerant to the evaporator. The expansion device generates power using the decompression and expansion and transmits the power to the rotary shaft. The variable discharge rate mechanism changes the discharge rate of the expansion device per rotation of the rotary shaft. The compressor, the expansion device, and the variable discharge rate mechanism are integrated.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a cross-sectional view illustrating a unit for a refrigeration cycle apparatus according a first embodiment of the present invention;
Fig. 2 is a cross-sectional view illustrating an expansion device having a variable-speed mechanism included in the refrigerant circulation passage shown in Fig. 1;
Fig. 3 is a graph showing the relationship between the enthalpy and the pressure of refrigerant used in the refrigerant circulation passage of Fig. 1; and
Fig. 4 is a partial cross-sectional view illustrating a unit for a refrigeration cycle apparatus according to a second embodiment of the present invention.

### DETAILED DESCRIPTION OF THE PREFERRED EMBODIMENTS

A vehicular refrigeration cycle apparatus and a unit for the refrigeration cycle apparatus according to first and second embodiments of the present invention will be described in the following. In the second embodiment, only the components different from the first embodiment are explained. Like or similar components are given the like numbers and detailed explanations are omitted.

First, the refrigeration cycle apparatus will be described.

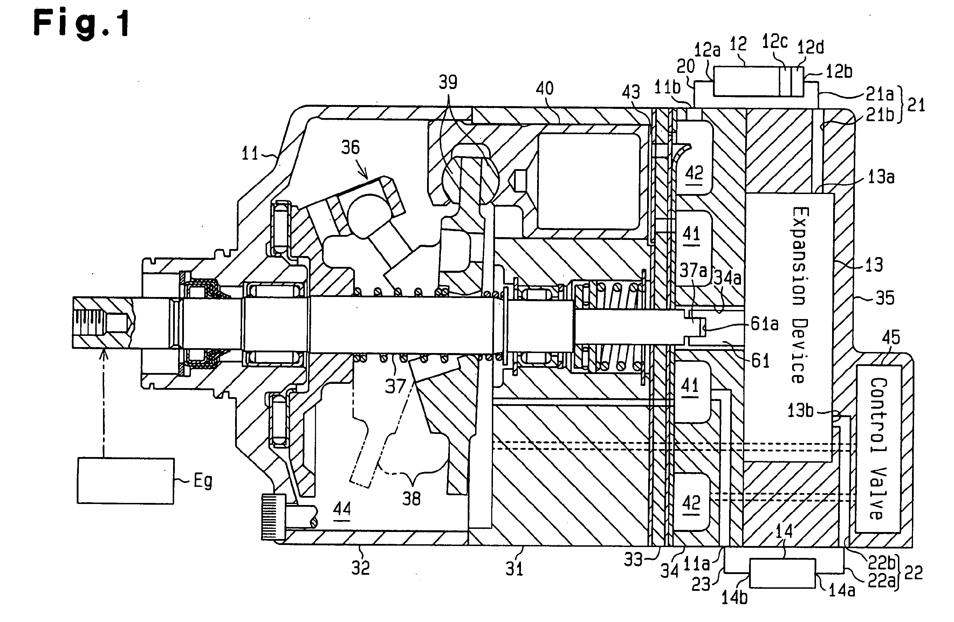

As shown in Fig. 1, the refrigeration cycle apparatus has a refrigerant circulation passage, which includes a compressor 11, a radiator 12, an expansion device 13, and an evaporator 14. Carbon dioxide is used as refrigerant (fluid) in the refrigerant circulation passage.

The refrigerant circulation passage has refrigerant passages 20, 21. The refrigerant passage 20 includes a pipe connecting a discharge port 11b of the compressor 11 with an inlet 12a of the radiator 12. The refrigerant passage 21 connects an outlet 12b of the radiator 12 with an inlet 13a of the expansion device 13. The refrigerant circulation passage also has refrigerant passages 22, 23. The refrigerant passage 22 connects an outlet 13b of the expansion device 13 with an inlet 14a of the evaporator 14. The refrigerant passage 23 connects an outlet 14b of the evaporator 14 with a suction port 11a of the compressor 11. A pressure sensor (detection device) 12c and a temperature sensor 12d are provided at the outlet 12b of the radiator 12. The pressure sensor 12c detects the pressure of refrigerant at the outlet 12b, which represents a cycle pressure in this embodiment. The temperature sensor 12d detects the temperature of the refrigerant. Detection values of the sensors 12c, 12d are sent to an air conditioner ECU 15 (see Fig. 2). The air conditioner ECU 15 functions as a controller.

The compressor 11 draws refrigerant from the evaporator 14 through the refrigerant passage 23 and the suction port 11a. The compressor 11 compresses the drawn refrigerant, or increases the pressure of the refrigerant. The compressor 11 then discharges the compressed gas to the refrigerant passage 20 through the discharge port 11b. The radiator 12 performs heat exchange between the refrigerant from the refrigerant passage 20 and the outside air, thereby cooling the refrigerant. The refrigerant in the radiator 12 is drawn to the expansion device 13 through the refrigerant passage 21. The expansion device 13 decompresses and expands the refrigerant, thereby extracting power to be supplied to the compressor 11. At the same time, the expansion device 13 discharges the decompressed and expanded refrigerant to the refrigerant passage 22 through the outlet 13b. The evaporator 14 performs heat exchange between the refrigerant from the refrigerant passage 22 and the outside air, thereby heating the refrigerant.

The compressor 11 will now be described. The left end of the compressor 11 in Fig. 1 is defined as the front of the compressor 11, and the right end is defined as the rear of the compressor 11.

The housing of the compressor 11 includes a cylinder block 31, a front housing member 32, a cylinder head 34, and a rear housing member 35. The front housing member 32 is joined to the front end of the cylinder block 31. The cylinder head 34 is joined to the rear end of the cylinder block 31 with a valve assembly 33 in between. The rear housing member 35 is joined to the rear end of the cylinder head 34.

A piston type compression mechanism 36 is accommodated in the housing of the compressor 11. The compression mechanism 36 includes a compression mechanism rotary shaft 37 and a swash plate 38. The swash plate 38 rotates along rotation of the compression mechanism rotary shaft 37. Pairs of shoes 39 are provided at the peripheral portion of the swash plate 38. Rotation of the swash plate 38 is converted into reciprocation of pistons 40 by the shoes 39. Refrigerant is compressed accordingly. A suction chamber 41 and a discharge chamber 42 are defined in the cylinder head 34. Refrigerant is drawn to the suction chamber 41 from the refrigerant passage 23 through the suction port 11a. The refrigerant is then drawn to compression chambers 43 and compressed in the compression chambers 43. The compressed gas is discharged to the refrigerant passage 20 through the discharge chamber 42 and the discharge port 11b.

A front portion of the compression mechanism rotary shaft 37 is rotatably supported by the front housing member 32 and protrudes to the outside of the compressor housing. The front portion of the compression mechanism rotary shaft 37, which extends to the outside of the housing, is coupled to and driven by an engine Eg, which is a drive source of the vehicle, by way of a power transmission mechanism (not shown). The compression mechanism rotary shaft 37 is rotated by power of the engine Eg. That is, the engine Eg functions as a drive source of the compressor 11.

A rear portion of the compression mechanism rotary shaft 37 is rotatably supported by the cylinder block 31. The rear end of the compression mechanism rotary shaft 37 extends through the valve assembly 33 and projects rearward from the valve assembly 33 to be located in a through hole 34a formed in the center of the cylinder head 34.

The compression mechanism 36 is of a variable displacement type. That is, the swash plate 38 is housed in a crank chamber 44 and can be inclined with respect to the compression mechanism rotary shaft 37. The pressure in the crank chamber 44 is controlled by adjusting the opening degree of a control valve 45. Accordingly, the stroke of the pistons 40 is changed to vary the compressor displacement.

The expansion device 13 will now be described.

The expansion device 13 is accommodated in the rear housing member 35 of the compressor 11. The housing of the expansion device 13 is integrated with the housing of the compressor 11.

In this embodiment, the compressor 11 and the expansion device 13 accommodated in the housing of the compressor 11 form a unit for a refrigeration cycle apparatus.

A circulation hole 21b is formed in the rear housing member 35 to communicate with the inlet 13a of the expansion device 13. A pipe 21a is attached to the rear housing member 35 to communicate with the circulation hole 21b. The pipe 21a and the circulation hole 21b form the refrigerant passage 21. A circulation hole 22b is formed in the rear housing member 35 to communicate with the outlet 13b of the expansion device 13. A pipe 22a is attached to the rear housing member 35 to communicate with the circulation hole 22b. The pipe 22a and the circulation hole 22b form the refrigerant passage 22.

As shown in Fig. 2, the expansion device 13 includes a vane type expansion mechanism 50, and a variable-speed mechanism 51 forming a variable discharge rate mechanism. The housing of the expansion device 13 is formed of a front housing member 52 and a rear housing member 54, which is joined to the rear end of the front housing member 52 with a wall plate 53 in between. The front housing member 52 and the wall plate 53 serve as the housing of the variable-speed mechanism 51. That is, in this embodiment, the housing of the variable-speed mechanism 51 forms part of the housing of the expansion device 13.

The expansion mechanism 50 includes a substantially cylindrical rotor 56. Vane grooves are formed in radial directions on the outer circumferential surface of the rotor 56. The expansion mechanism 50 also has vanes each of which received by one of the vane grooves to reciprocate therein.

A rotor chamber 57 is defined between the wall plate 53 and the rear housing member 54. The rotor 56 is fixed to an expansion mechanism rotary shaft 55 to rotate integrally with the expansion mechanism rotary shaft 55. The expansion mechanism rotary shaft 55 extends through the rotor chamber 57 and rotatably supported by the wall plate 53 and the rear housing member 54 with bearings. A space defined by the inner circumferential surface of the rotor chamber 57, the outer circumferential surface of the rotor 56, and each adjacent pair of the vanes consists a refrigerant chamber 57a to decompress and expand refrigerant. Refrigerant is drawn into each refrigerant chamber 57a through the inlet 13a. The refrigerant is then decompressed and expanded, which generates rotational force of the rotor 56. The rotational force is extracted as power by way of the expansion mechanism rotary shaft 55. When the refrigerant chamber 57a is moved to a downstream side, the decompressed and expanded refrigerant is discharged to the refrigerant passage 22 from the refrigerant chamber 57a through the outlet 13b.

In the expansion device 13, a variable-speed mechanism chamber 58 is defined between the front housing member 52 and the wall plate 53 to accommodate the variable-speed mechanism 51. A through hole 53a is formed in the wall plate 53. The expansion mechanism rotary shaft 55 protrudes into the variable-speed mechanism chamber 58 through the through hole 53a. The variable-speed mechanism 51 is a planetary gear train. An internal gear 60, which is part of the variable-speed mechanism 51, is fixed to the front end portion of the expansion mechanism rotary shaft 55, which protrudes into the variable-speed mechanism chamber 58. The internal gear 60 rotates integrally with the expansion mechanism rotary shaft 55.

A variable-speed mechanism rotary shaft 61 is rotatably supported by the front wall of the front housing member 52 with bearings. A front end portion of the variable-speed mechanism rotary shaft 61 protrudes frontward of the front housing member 52 through a through hole 52a formed in the front wall of the front housing member 52. A sun gear 62 is fixed to the rear end of the variable-speed mechanism rotary shaft 61 to rotate integrally with the shaft 61.

Three planetary gears 63 (only two of which are shown in Fig. 2) are located between and meshed with the internal gear 60 and the sun gear 62.

A gear carrier 64 is supported on the outer circumferential surface of the variable-speed mechanism rotary shaft 61 to rotate relative to the variable-speed mechanism rotary shaft 61. Three support shafts 64b projects from the gear carrier 64. Each planetary gear 63 is rotatably supported by the gear carrier 64 with one of the support shafts 64b. A main body 64a of the gear carrier 64 is formed as a spur gear. A teeth portion 64c of the main body 64a is meshed with a gear (not shown) fixed to an output shaft of an electric motor 65. The rotation speed of the gear carrier 64 about the axis of the variable-speed mechanism rotary shaft 61 is adjusted by controlling the electric motor 65, that is by controlling the rotation speed and the rotation direction of the electric motor 65.

An engagement recess 61a is formed in the front end face of the variable-speed mechanism rotary shaft 61. The engagement recess 61a is engaged with an engagement projection 37a formed on the rear end face of the compression mechanism rotary shaft 37 (see Fig. 1). The engagement permits power to be transmitted between the compression mechanism rotary shaft 37 and the variable-speed mechanism rotary shaft 61. That is, the variable-speed mechanism 51 is located in the power transmission path between the compression mechanism rotary shaft 37 and the expansion mechanism rotary shaft 55.

Control of the electric motor 65 permits the variable-speed mechanism 51 to continuously change the ratio of the rotation speed, or the gear ratio, between the compression mechanism rotary shaft 37 and the expansion mechanism rotary shaft 55. Adjusting the rotation speed ratio between the compression mechanism rotary shaft 37 and the expansion mechanism rotary shaft 55 permits the discharge rate of the expansion device 13 per rotation of the compression mechanism rotary shaft 37 to be adjusted.

The air conditioner ECU 15 controls the electric motor 65 based on a detection value of the pressure sensor 12c and a detection value of the temperature sensor 12d such that the refrigerant pressure at the outlet 12b of the radiator 12 corresponds to the refrigerant temperature, thereby maintaining a coefficient of performance (COP) at a high level. That is, based on a detection value of the temperature sensor 12d, the air conditioner ECU 15 computes a target value of the cycle pressure that maintains the COP at a high level. The air conditioner ECU 15 controls the electric motor 65 to eliminate the difference between the detection value of the pressure sensor 12c and the target value.

When the detection value of the pressure sensor 12c is lower than the target value, the air conditioner ECU 15 controls the electric motor 65 to reduce the rotation speed of the expansion mechanism rotary shaft 55. Reduction of the rotation speed of the expansion mechanism rotary shaft 55 decreases the rate of refrigerant discharged by the expansion device 13, which increases the refrigerant pressure at the outlet 12b of the radiator 12. In contrast, when the detection value of the pressure sensor 12c is higher than the target value, the air conditioner ECU 15 controls the electric motor 65 to increase the rotation speed of the expansion mechanism rotary shaft 55. An increase of the rotation speed of the expansion mechanism rotary shaft 55 increases the rate of refrigerant discharged by the expansion device 13, which lowers the refrigerant pressure at the outlet 12b of the radiator 12.

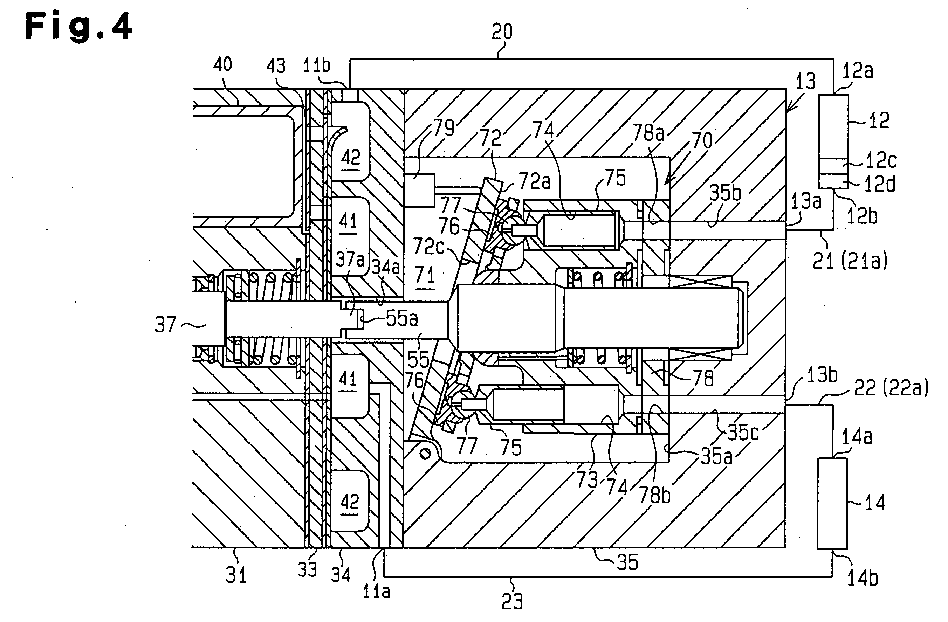

This embodiment provides the following advantages.
(1) The refrigeration cycle apparatus of this embodiment has a variable discharge rate mechanism (the variable-speed mechanism 51), which is capable of changing the discharge rate of the expansion device 13 per rotation of the compression mechanism rotary shaft 37. Accordingly, even if the rotation speed of the compression mechanism rotary shaft 37 fluctuates, the cycle pressure is adjusted by changing the discharge rate of the expansion device 13 per rotation of the compression mechanism rotary shaft 37. Therefore, the configuration of this embodiment permits the expansion device 13 to recover power while adjusting the cycle pressure without a decompression valve for adjusting the cycle pressure between the outlet 13b of the expansion device 13 and the inlet 14a of the evaporator 14 in the refrigerant circulation passage.
   Using the recovered power to drive the compressor 11 improves the COP of the refrigeration cycle apparatus.
   Line 111 of Fig. 3 represents the relationship between the enthalpy and the pressure of the refrigerant in the refrigeration cycle apparatus according to this embodiment. In this embodiment, the state of the relationship between the enthalpy and the pressure shifts in the order of a state A, a state B, a state C, a state F, and then the state A. The state F represents the state at the outlet 13b of the expansion device, 13, that is, at the inlet 14a of the evaporator 14. Unlike the prior art configuration with the decompression valve described in the prior art section, the expansion device 13 is capable of decompress refrigerant such that the pressure of the refrigerant drops from the state C to the state F without preserving the amount of pressure that corresponds to the decompression by the decompression valve (the pressure difference between the state D and the state E). In this embodiment, in addition to the power generated by the expansion device 13 as the state shifts from the state C to the state D, power generated by the expansion device 13 as the state shifts from the state D to the state F (power corresponding to the enthalpy difference between the state D and the sate F) is recovered. Accordingly, the amount of the recovered power is increased.
(2) The expansion device 13 is incorporated in the compressor 11, and the housing of the compressor 11 and the housing of the expansion device 13 are integrated. The housing of the expansion device 13 forms part of the housing of the variable-speed mechanism 51. Accordingly, compared to, for example, a case where the housings are separately formed and not fixed to one another, the piping between the compressor 11 and the expansion device 13 in the refrigerant circulation passage is facilitated. Further, compared to a case where the housing of the variable-speed mechanism 51 is separate and spaced from the housing of the expansion device 13 and the housing of the compressor 11, the structure for transmitting power generated by the expansion device 13 to the compressor 11 is easily simplified and downsized.
(3) The variable-speed mechanism 51 is located in the power transmission path between the compression mechanism rotary shaft 37 and the expansion mechanism rotary shaft 55, and the variable-speed mechanism 51 is capable of changing the rotation speed ratio between the compression mechanism rotary shaft 37 and the expansion mechanism rotary shaft 55. Therefore, by adjusting the rotation speed ratio between the compression mechanism rotary shaft 37 and the expansion mechanism rotary shaft 55 in the variable-speed mechanism 51, the discharge rate of the expansion device 13 per rotation of the compression mechanism rotary shaft 37 is controlled. Accordingly, the flow rate of refrigerant discharged by the expansion device 13 is controlled.
(4) The variable-speed mechanism 51 is a planetary gear train. Since the planetary gear train permits the rotation speed ratio between the compression mechanism rotary shaft 37 and the expansion mechanism rotary shaft 55 to be continuously changed, the discharge rate of the expansion device 13 per rotation of the compression mechanism rotary shaft 37 can be finely adjusted.
(5) The air conditioner ECU 15 drives the variable discharge rate mechanism (the variable-speed mechanism 51) in a direction to cancel the difference between the detection value of the pressure sensor 12c and the target value, thereby adjusting the discharge amount of the expansion device 13. This configuration permits the COP of the refrigerant circulation passage to be accurately maintained at a high level.
(6) The refrigerant is carbon dioxide. The COP of a refrigeration cycle apparatus using carbon dioxide as refrigerant is lower than that of a refrigeration cycle apparatus using chlorofluorocarbon as refrigerant. Therefore, use of the power generated by the expansion device 13 as drive force of the compressor 11 is particularly effective for the refrigeration cycle apparatus using carbon dioxide as refrigerant since the COP is maintained at a high level.
(7) The engine Eg, which is the drive source of the vehicle, is used as the drive source of the compressor 11. In such a refrigeration cycle apparatus for a vehicle, the rotation speed of the compression mechanism rotary shaft 37 is likely to be influenced by the rotation speed of the engine Eg. Therefore, the configuration for increasing the amount of recovered power by the expansion device 13, which is capable of changing the discharge rate per rotation of the compression mechanism rotary shaft 37, while adjusting the cycle pressure is particularly effective for improving the COP of the refrigeration cycle apparatus.
(8) The power generated by the expansion mechanism 50 of the expansion device 13 is not converted into electricity, but is transmitted to the compression mechanism rotary shaft 37 as rotational force from the expansion mechanism rotary shaft 55 of the expansion mechanism 50 through the variable-speed mechanism 51, and is used as drive force of the compression mechanism 36. Therefore, when compared to, for example, a configuration in which power generated by an expansion device is converted into electricity and a compression mechanism is driven by power of an electric motor using the electricity, recovered power is effectively used as drive force of the compression mechanism without being wasted.
   A second embodiment of the present invention will now be described. In the first embodiment, the discharge rate of the expansion device 13 per rotation of the compression mechanism rotary shaft 37 is adjusted by adjusting the rotation speed ratio between the compression mechanism rotary shaft 37 and the expansion mechanism rotary shaft 55 with the variable-speed mechanism 51 provided on the power transmission path between the compression mechanism rotary shaft 37 and the expansion mechanism rotary shaft 55. In contrast to this, in the second embodiment, the variable-speed mechanism 51 is omitted, and the expansion device 13 is capable of changing the displacement. The displacement of the expansion device 13 is adjusted to adjust the discharge rate of the expansion device 13 per rotation of the compression mechanism rotary shaft 37.
   As shown in Fig. 4, an expansion device chamber 71 is defined in the rear housing member 35 joined to the rear end of the cylinder head 34 of the compressor 11. An expansion mechanism 70 of the expansion device 13 of this embodiment is accommodated in the expansion device chamber 71. The rear housing member 35 is used as the housing of the expansion device 13. In this embodiment, the compressor 11 and the expansion device 13 provided at the rear of the compressor 11 form a unit for a refrigeration cycle apparatus.
   In the rear housing member 35, the expansion mechanism rotary shaft 55 is rotatably supported with a bearing and extends through the expansion device chamber 71. A front end portion of the expansion mechanism rotary shaft 55 is inserted in the through hole 34a of the cylinder head 34. An engagement recess 55a is formed in the front end face of the expansion mechanism rotary shaft 55. Engagement of the recess 55a and the projection 37a on the compression mechanism rotary shaft 37 permits power transmission between the compression mechanism rotary shaft 37 and the expansion mechanism rotary shaft 55.
   The expansion mechanism 70 accommodated in the expansion device chamber 71 is of an axial piston type. In the expansion device chamber 71, a swash plate 72 having a cam surface 72a is supported by the circumferential wall of the rear housing 35. The swash plate 72 can be inclined with respect to the axis of the expansion mechanism rotary shaft 55. A shaft hole 72b is formed in the center of the swash plate 72 to receive the expansion mechanism rotary shaft 55. The inclination angle the swash plate 72 (the cam surface 72a) with respect to the axis of the expansion mechanism rotary shaft 55 is changed by an actuator 79. The actuator 79 changes the inclination angle in response to a control signal from the air conditioner ECU 15 (not illustrated in Fig. 4). The swash plate 72 and the actuator 79 form a variable displacement mechanism that is capable of changing the discharge amount of the expansion mechanism 13.
   The expansion mechanism 70 includes a cylinder block 73 located in the expansion device chamber 71. The cylinder block 73 is fitted about the expansion mechanism rotary shaft 55 to rotate integrally with the shaft 55. Cylinder bores 74 are formed in the cylinder block 73 about the expansion mechanism rotary shaft 55. Although only two of them are shown in Fig. 4, the number of the cylinder bores 74 is not limited to two. A piston 75 is accommodated in each cylinder bore 74. Each piston 75 reciprocates in the associated cylinder bore 74.
   A shoe 76 is connected to each piston 75 with a spherical joint 77. Each shoe 76 slides on the cam surface 72a of the swash plate 72.
   A valve plate 78 is fixed to a front surface 35a of the rear wall of the rear housing member 35. The front surface of the valve plate 78 and the rear surface of the cylinder 73 closely contact each other and slide on each other.
   An inlet port 78a and an outlet port 78b are formed in the valve plate 78. The ports 78a, 78b extend between the front and rear surfaces the valve plate 78. The inlet port 78a is connected to the refrigerant passage 21 (the pipe 21a) through an inlet passage 35b formed in the rear wall of the rear housing member 35. That is, an opening of the inlet passage 35b that is connected to the refrigerant passage 21 is the inlet 13a. Likewise, the outlet port 78b is connected to the refrigerant passage 22 (the pipe 22a) through an outlet passage 35c formed in the rear wall of the rear housing member 35. That is, an opening of the outlet passage 35c that is connected to the refrigerant passage 22 is the outlet 13b.
   In a state where the inlet port 78a of the valve plate 78 communicates with one of the cylinder bores 74, refrigerant is drawn to the cylinder bore 74 from the radiator 12 through the inlet passage 35b. The refrigerant expands in the cylinder bore 74 and generates frontward thrust applied to the corresponding piston 75. The thrust presses the corresponding shoe 76 against the cam surface 72a of the swash plate 72 with the corresponding spherical joint 77. This generates a rotational force in the cylinder block 73 about the expansion mechanism rotary shaft 55. The expansion device 13 extracts the rotational force as power and transmits the power to the compression mechanism rotary shaft 37.
   When the cylinder bore 74 communicates with the outlet port 78b as the cylinder block 73 rotates, the expanded refrigerant in the cylinder bore 74 is discharged to the refrigerant passage 22 through the outlet port 78b and the outlet passage 35c.
   In the expansion device 13 of this embodiment, the stroke of the pistons 75 is changed according to the inclination angle of the swash plate 72. The displacement is changed accordingly. As the displacement is changed, the discharge rate of the expansion device 13 per rotation of the compression mechanism rotary shaft 37 is adjusted. In other words, the variable displacement mechanism of the expansion device 13 forms a variable discharge rate mechanism.
   The air conditioner ECU 15 controls the inclination angle of the swash plate 72 (the cam surface 72a) with the actuator 79 based on a detection value of the pressure sensor 12c and a detection value of the temperature sensor 12d. To decrease the displacement of the expansion device 13, the air conditioner ECU 15 inclines the swash plate 72 in a direction decreasing the stroke of the pistons 75. Conversely, to increase the displacement, the air conditioner ECU 15 inclines the swash plate 72 in a direction increasing the stroke of the pistons 75.
   The air conditioner ECU 15 controls the inclination angle of the swash plate 72 such that the refrigerant pressure at the outlet 12b of the radiator 12 corresponds to the refrigerant temperature, thereby maintaining the COP at a high level. That is, the air conditioner ECU 15 computes a target value of the cycle pressure suitable for maintaining the COP at a high level based on a detection value of the temperature sensor 12d, then controls the inclination angle such that the difference between the detection value of the pressure sensor 12c and the target value is eliminated.
   When the detection value of the pressure sensor 12c is lower than the target value, the air conditioner ECU 15 reduces the inclination angle of the swash plate 72 such that the refrigerant discharge amount of the expansion device 13 is reduced. In contrast, when the detection value of the pressure sensor 12c is higher than the target value, the air conditioner ECU 15 increases the inclination angle of the swash plate 72 so that the refrigerant discharge amount is increased.
   In addition to the advantages (1), (2) and (5) to (8), the second embodiment has the following advantage.
(9) The expansion device 13 of this embodiment is capable of changing the displacement. This configuration permits the displacement of the expansion device 13 per rotation of the compression mechanism rotary shaft 37 to be adjusted by adjusting the displacement of the expansion device 13. Accordingly, the discharge rate of refrigerant discharged by the expansion device 13 is adjusted.

The invention may be embodied in the following forms.

In the first embodiment, the housing of the compressor 11 and the housing of the expansion device 13 are separate. However, the housing of the expansion device 13 may be omitted, and the rear housing member 35 of the compressor 11 may be used as the housing of the expansion device 13.

In the illustrated embodiments, the expansion mechanism 50, the variable-speed mechanism 51, and the compressor 11 are integrated. However, at least one of the expansion mechanism 50 and the variable-speed mechanism 51 may be separate and spaced from the compressor 11.

In the first embodiment, the variable-speed mechanism 51 is capable of continuously varying the rotation speed ratio between the compression mechanism rotary shaft 37 and the expansion mechanism rotary shaft 55. However, the variable-speed mechanism 51 need not be capable of continuously varying the rotation speed ratio as long as the variable-speed mechanism 51 is capable of varying the rotation speed ratio in multiple stages.

In the first embodiment, a scroll type expansion device may be employed.

In the first embodiment, the variable-speed mechanism 51 has the three planetary gears 63. However, this configuration may be modified.

In the illustrated embodiments, the piston type compression mechanism 36 that is capable of changing the displacement is used. However, other types of compression mechanism may be used. A piston type compression mechanism of fixed displacement may be employed. Compression mechanisms other than piston type, for example, a scroll type compression mechanism or a vane type compression mechanism may be employed.

The present invention may be applied to a refrigeration cycle apparatus that is not used in vehicles.

Refrigerant other than carbon dioxide may be used. For example, chlorofluorocarbon may be used. When chlorofluorocarbon is used as the refrigerant, for example, the pressure sensor 12c and the temperature sensor 12d provided at the outlet of the radiator 12 are omitted. Instead, a pressure sensor (detection means) and a temperature sensor are provided at the outlet 14b of the evaporator 14 to detect the refrigerant pressure (the cycle pressure) and the refrigerant temperature at the outlet 14b. In this case, the air conditioner ECU computes a target value of the cycle pressure suitable for maintaining the COP at a high level based, for example, on a detection value of the temperature sensor. Then, the air conditioner ECU adjusts the discharge rate of the expansion device 13 by driving the variable discharge rate mechanism in a direction minimizing the difference between the detection value of the pressure sensor and the target value.

The present examples and embodiments are to be considered as illustrative and not restrictive and the invention is not to be limited to the details given herein, but may be modified within the scope and equivalence of the appended claims.

## Claims

1. A refrigeration cycle apparatus, comprising:
a compressor having a rotary shaft, wherein the rotary shaft is rotated by an external drive source, wherein, when the rotary shaft is rotated, the compressor increases the pressure of refrigerant;
a radiator for cooling refrigerant the pressure of which has been increased by the compressor;
an expansion device, wherein the expansion device decompresses and expands refrigerant that has been cooled by the radiator, and then discharges the refrigerant, and wherein the expansion device generates power using the decompression and expansion and transmits the power to the rotary shaft;
an evaporator, wherein the evaporator heats refrigerant that has been decompressed and expanded by the expansion device, the apparatus being **characterized by**:
a variable discharge rate mechanism, which is capable of changing the discharge rate of the expansion device per rotation of the rotary shaft.

2. The refrigeration cycle apparatus according to claim 1, **characterized in that** the expansion device has a rotary shaft, wherein the variable discharge rate mechanism is a variable-speed mechanism located between the rotary shaft of the compressor and the rotary shaft of the expansion device, and wherein the variable-speed mechanism changes the ratio of rotation speed between the rotary shaft of the compressor and the rotary shaft of the expansion device.

3. The refrigeration cycle apparatus according to claim 2, **characterized in that** the variable-speed mechanism is a planetary gear train.

4. The refrigeration cycle apparatus according to claim 1, **characterized in that** the variable discharge rate mechanism is a variable displacement mechanism, wherein the variable displacement mechanism is incorporated in the expansion device and is capable of changing the displacement of the expansion device.

5. The refrigeration cycle apparatus according to claim 4, **characterized in that** the variable displacement mechanism includes a piston, a swash plate that converts rotation of the rotary shaft into reciprocation of the piston, and an actuator that changes the inclination angle of the swash plate, and wherein the displacement of the expansion device is changed according to the inclination angle of the swash plate.

6. The refrigeration cycle apparatus according to any one of claims 1 to 5, further being **characterized by**:
a refrigerant circulation passage that includes the radiator, the evaporator, the compressor, and the expansion device;
a detection device that detects the pressure at an arbitrary section in the refrigerant circulation passage; and
a controller that controls the variable discharge rate mechanism such that the difference between a detection value of the detection device and a predetermined target value is eliminated.

7. The refrigeration cycle apparatus according to claim 6, **characterized in that** the detection device detects the pressure at a section of the refrigerant circulation passage in the vicinity of an outlet of the radiator.

8. The refrigeration cycle apparatus according to claim 6, **characterized in that** the controller determines the target value based on the temperature of the refrigerant at an outlet of the radiator.

9. The refrigeration cycle apparatus according to any one of claims 1 to 8, **characterized in that** the refrigerant is carbon dioxide.

10. The refrigeration cycle apparatus according to any one of claims 1 to 9, **characterized in that** the apparatus is mounted on a vehicle, and wherein the external drive source is a drive source of the vehicle.

11. The refrigeration cycle apparatus according to any one of claims 1 to 10, **characterized in that** the compressor, the expansion device, and the variable discharge rate mechanism are integrated.

12. The refrigeration cycle apparatus according to claim 11, **characterized in that** the expansion device and the variable discharge rate mechanism are incorporated in the housing of the compressor.

13. A unit forming a part of the refrigeration cycle apparatus according to any one of claims 1 to 10, **characterized in that** the compressor, the expansion device, and the variable discharge are integrated.

14. The unit according to claim 13, **characterized in that** the expansion device and the variable discharge rate mechanism are incorporated in a housing of the compressor.
